# EUROPEAN PATENT SPECIFICATION

(11) **EP 3 676 324 B1**
(45) Date of publication and mention of the grant of the patent: **30.08.2023**
(21) Application number: 17923103.0
(22) Date of filing: 30.08.2017
(51) Int. Cl.: C08L 9/06, B60C 1/00, C08K 3/04, C08K 3/36, C08K 5/521, C08L 57/02, C08L 9/00

(54) **A TIRE HAVING A TREAD COMPRISING A RUBBER COMPOSITION**
REIFEN MIT EINER LAUFFLÄCHE MIT EINER KAUTSCHUKZUSAMMENSETZUNG
PNEU PRÉSENTANT UNE BANDE DE ROULEMENT COMPRENANT UNE COMPOSITION DE CAOUTCHOUC

(43) Date of publication of application: 08.07.2020
(73) Proprietor: Compagnie Générale des Etablissements Michelin, 63000 Clermont-Ferrand (FR)
(72) Inventor: MAESAKA Masayuki, Tokyo 163-1073 (JP)
(74) Representative: Wroblewski, Nicolas Paul André
(86) International application number: PCT/JP2017/031088
(87) International publication number: WO 2019/043820

(56) References cited:
- EP-A1- 3 532 311
- WO-A1-2013/152980
- WO-A1-2016/002967
- WO-A1-2016/098908
- WO-A1-2016/171020
- WO-A1-2016/195052
- FR-A1- 3 029 932
- JP-A- 2016 037 544
- JP-A- 2017 014 358
- JP-A- 2017 110 071
- US-A1- 2016 068 666

## Description

### Technical Field

The field of the invention is that of rubber compositions for tire treads, more precisely rubber compositions for tire treads suitable for snow tires or winter tires capable of rolling over ground surfaces covered with snow.

### Background Art

As is known, the snow tires classified in a category of use "snow", identified by an inscription the alpine symbol ("3-peak-mountain with snowflake"), marked on their sidewalls, mean tires whose tread patterns, tread compounds and/or structures are primarily designed to achieve, in snow conditions, a performance better than that of normal tires intended for normal on-road use with regard to their abilities to initiate, maintain or stop vehicle motion.

### Citation List

### Patent Literature

PTL 1: WO 2012/069565

The patent literature 1 discloses a tire tread that comprises a rubber composition based on a functional diene elastomer, a reinforcing inorganic filler and a plasticizing agent, said tire having an improved grip on wet ground without deteriorating the grip performance on snow ground.

Snow or wet grounds have a low friction coefficient, therefore a constant objective of tire manufacturers is to further improve the balance of performances of tires between grips on snow and on wet grounds.

### Summary of Invention

### Technical Problem

During their research, the inventor has discovered that a specific rubber composition for a tire tread which allows an unexpectedly improved balance of tire performances between grips on snow and wet grounds.

In the present description, unless expressly stated otherwise, all the percentages (%) indicated are percentages by weight (wt%).

The expression "elastomer matrix" is understood to mean, in a given composition, all of the elastomers present in said rubber composition.

The abbreviation "phr" signifies parts by weight per hundred parts by weight of the elastomer matrix in the considered rubber composition.

In the present description, unless expressly indicated otherwise, each Tg_{DSC} (glass transition temperature) is measured in a known way by DSC (Differential Scanning Calorimetry) in accordance with Standard ASTM D3418-08.

Any interval of values denoted by the expression "between a and b" represents the range of values of greater than "a" and of less than "b" (i.e. the limits a and b excluded) whereas any interval of values denoted by the expression "from a to b" means the range of values going from "a" to "b" (i.e. including the strict limits a and b).

The expression "based on" should be understood in the present application to mean a composition comprising the mixture(s) and/or the product of the reaction of the various constituents used, some of the constituents being able or intended to react together, at least partly, during the various manufacturing phases of the composition, in particular during the vulcanization (curing).

### Solution to Problem

A first aspect of the invention is a tire having a tread that comprises a rubber composition based on at least an elastomer matrix, a reinforcing filler comprising more than 200 phr of a reinforcing inorganic filler, and a plasticizing agent comprising more than 30 phr of at least one liquid plasticizer exhibiting a glass transition temperature (Tg_{DSC}) less than -70°C.

### Advantageous Effects of Invention

The specific rubber composition of the tread of the tire allows the improved balance of tire performances between grips on snow and wet grounds.

The tires of the invention are particularly intended to equip passenger motor vehicles, including 4×4 (four-wheel drive) vehicles and SUV (Sport Utility Vehicles) vehicles, and industrial vehicles particularly selected from vans and heavy duty vehicles (i.e., bus or heavy road transport vehicles (lorries, tractors, trailers)).

Each of the below aspect(s), the embodiment(s) and the variant(s) including each of the preferred range(s) and/or matter(s) may be applied to any one of the other aspect(s), the other embodiment(s) and the other variant(s) of the invention unless expressly stated otherwise.

Elastomer (or loosely "rubber", the two terms being regarded as synonyms) of the "diene" type is to be understood in a known manner as an (meaning one or more) elastomer derived at least partly (i.e. a homopolymer or a copolymer) from diene monomers (monomers bearing two carbon-carbon double bonds, conjugated or not).

These diene elastomers can be classified into two categories: "essentially unsaturated" or "essentially saturated". Generally, the expression "essentially unsaturated" is understood to mean a diene elastomer resulting at least in part from conjugated diene monomers having a content of units of diene origin (conjugated dienes) which is greater than 15% (mol %); thus it is that diene elastomers such as butyl rubbers or diene/α -olefin copolymers of the EPDM type do not fall under the preceding definition and may especially be described as "essentially saturated" diene elastomers (low or very low content of units of diene origin, always less than 15%). In the category of "essentially unsaturated" diene elastomers, the expression "highly unsaturated" diene elastomer is understood to mean in particular a diene elastomer having a content of units of diene origin (conjugated dienes) which is greater than 50%.

Although it applies to any type of diene elastomer, a person skilled in the art of tires will understand that the invention is preferably employed with essentially unsaturated diene elastomers.

Given these definitions, the expression diene elastomer capable of being used in the compositions in accordance with the invention is understood in particular to mean:
(a) - any homopolymer obtained by polymerization of a conjugated diene monomer, preferably having from 4 to 12 carbon atoms;
(b) - any copolymer obtained by copolymerization of one or more conjugated dienes with one another or with one or more vinyl aromatic compounds preferably having from 8 to 20 carbon atoms.

The following are suitable in particular as conjugated dienes: 1,3-butadiene, 2-methyl-1,3-butadiene, 2,3-di(C₁-C₅ alkyl)-1,3-butadienes, such as, for example, 2,3-dimethyl-1,3-butadiene, 2,3-diethyl-1,3-butadiene, 2-methyl-3-ethyl-1 ,3-butadiene or 2-methyl-3-isopropyl-1 ,3-butadiene, an aryl-1,3-butadiene, 1,3-pentadiene or 2,4-hexadiene. The following, for example, are suitable as vinylaromatic compounds: styrene, ortho-, meta- or para-methylstyrene, the"vinyltoluene" commercial mixture, para-(tert-butyl) styrene, methoxystyrenes, chlorostyrenes, vinylmesitylene, divinylbenzene or vinylnaphthalene.

The rubber composition of the tread of the tire according to the invention is based on the elastomer matrix which may comprise at least one diene elastomer selected from the group consisting of polybutadienes (BRs), synthetic polyisoprenes (IRs), natural rubber (NR), butadiene copolymers, isoprene copolymers and the mixtures thereof; such copolymers are preferably selected from the group consisting of butadiene copolymers the mixtures thereof, more preferably selected from the group consisting of styrene-butadiene copolymers (SBR), butadiene-isoprene copolymers (BIR), styreneisoprene copolymers (SIR), styrene-butadiene-isoprene copolymers (SBIR) and the mixtures thereof, still more preferably selected from the group consisting of styrene-butadiene copolymers (SBR) and the mixtures thereof.

The diene elastomer may have any microstructure which depends on the polymerization conditions used, in particular on the presence or absence of a modifying and/or randomizing agent and on the amounts of modifying and/or randomizing agent employed. This elastomer may, for example, be a block, statistical, sequential or micro sequential elastomer and may be prepared in dispersion or in solution. This elastomer may be coupled and/or star-branched or else functionalized with a coupling and/or star-branching or functionalizing agent.

A second aspect of the invention is the tire according to the first aspect, wherein the elastomer matrix comprises more than 50 phr of a first diene elastomer which is a styrene-butadiene copolymer, preferably a solution styrene-butadiene copolymer, and optionally comprising 0 to less than 50 phr of a second diene elastomer which is different from the first diene elastomer, which means the elastomer matrix comprises no second diene elastomer or comprises less than 50 phr of the second diene elastomer.

A third aspect of the invention is the tire according to the second aspect, wherein the styrene-butadiene copolymer exhibits a styrene unit of less than 30% by weight (for example, between 3 and 30% by weight) per 100% by weight of the styrene-butadiene copolymer, preferably less than 27% by weight (for example, between 5 and 27% by weight), more preferably less than 23% by weight (for example, between 7 and 23% by weight), still more preferably less than 20% by weight (for example, between 10 and 20% by weight), particularly at most 18% by weight (for example, from 12 to 18%). The styrene unit can be determined by 1H NMR method in accordance with ISO 21561.

A fourth aspect of the invention is the tire according to the second or the third aspect, wherein the first diene elastomer exhibits a glass transition temperature of less than - 40°C (for example, between -40°C and -110°C), preferably less than -45°C (for example, between -45°C and -105°C), more preferably less than -50°C (for example, between -50°C and -100°C), still more preferably less than -55°C (for example, between -55°C and -95°C), particularly at most -60°C (for example, -60°C to -90°C).

A fifth aspect of the invention is the tire according to any one of the second to the fourth aspects, wherein the elastomer matrix comprises 55 to 100 phr of the first diene elastomer, and optionally, 0 to 45 phr of the second diene elastomer, which means the elastomer matrix comprises no second diene elastomer or comprise at most 45 phr of the second diene elastomer.

According to another preferred embodiment of the second to the fourth aspects, the elastomer matrix comprises between 50 and 90 phr, preferably between 50 and 80 phr, more preferably between 50 and 70 phr, still more preferably 55 to 65 phr, of the first diene elastomer and between 10 and 50 phr, preferably between 20 and 50 phr, more preferably between 30 and 50 phr, still more preferably 35 to 45 phr, of the second diene elastomer.

A sixth aspect of the invention is the tire according to any one of the second to the fifth aspects, wherein the second diene elastomer is selected from the group consisting of polybutadienes, synthetic polyisoprenes, natural rubber, butadiene copolymers other than the first diene elastomer, isoprene copolymers and the mixtures thereof.

A seventh aspect of the invention is the tire according to any one of the second to the sixth aspects, wherein the second diene elastomer is a polybutadiene. The polybutadiene is preferably a cis-1,4-polybutadiene, i.e., a polybutadiene having a content of cis-1,4-bonds of greater than 90% (molar %), preferably greater than or equal to 96% (molar %).

The rubber composition of the tread of the tire according to the invention is based on a reinforcing filler.

The reinforcing filler may comprise a reinforcing inorganic filler (for example, silica), carbon black or the mixtures thereof, preferably may predominately comprise the reinforcing inorganic filler.

The reinforcing filler in the rubber composition of the tread of the tire according comprises more than 200 phr (for example, between 200 tSQ- and 350 phr) of a reinforcing inorganic filler.

An eighth aspect of the invention is the tire according to any one of the first to the seventh aspects, wherein the reinforcing filler comprises more than 200 phr (for example, between 200 and 300 phr), more particularly more than 210 phr (for example, between 210 and 290 phr), still more particularly more than 220 phr (for example, between 220 to 280 phr), advantageously more than 230 phr (for example, between 230 and 270 phr), more advantageously more than 240 phr (for example, from 240 and 260 phr), still more advantageously at least 245 phr (for example, from 245 to 255 phr), of the reinforcing inorganic filler.

The expression "reinforcing inorganic filler" should be understood here to mean any inorganic or mineral filler, whatever its color and its origin (natural or synthetic), also referred to as "white filler", "clear filler" or even "non-black filler", in contrast to carbon black, capable of reinforcing by itself alone, without means other than an intermediate coupling agent, a rubber composition intended for the manufacture of tires, in other words capable of replacing, in its reinforcing role, a conventional tire-grade carbon black; such a filler is generally characterized, in a known manner, by the presence of hydroxyl (-OH) groups at its surface.

The physical state under the presence of this filler is unimportant, whether it is in the form of powder, microbeads, granules, beads or any other suitable densified form. Of course, the reinforcing inorganic filler of the mixtures of various reinforcing inorganic fillers, preferably of highly dispersible siliceous and/or aluminous fillers is described hereafter.

Mineral fillers of the siliceous type, preferably silica (SiO₂) and/or the aluminous type, preferably alumina (Al₂O₃) are suitable in particular as the reinforcing inorganic fillers.

A ninth aspect of the invention is the tire according to any one of the first to the eighth aspects, wherein the reinforcing inorganic filler predominately comprises silica, that is, the reinforcing inorganic filler comprises more than 50% by weight of silica per 100% by weight of the reinforcing inorganic filler. Preferably, the reinforcing inorganic filler may comprise 100% by weight, of silica per 100% by weight of the reinforcing inorganic filler. The reinforcing inorganic filler may comprise a type of silica or a blend of several silicas. The silica used may be any reinforcing silica known to a person skilled in the art, in particular any precipitated or pyrogenic silica having a BET surface area and a CTAB specific surface area that are both less than 450 m²/g, preferably from 20 to 400 m²/g. Such silica may be covered or not. Mention will be made, as low specific surface silica, of Sidistar R300 from Elkem Silicon Materials. Mention will be made, as highly dispersible precipitated silicas ("HDSs"), for example, of "Ultrasil 7000" and "Ultrasil 7005" from Evonik, "Zeosil 1165 MP", "Zeosil 1135 MP" and "Zeosil 1115 MP" from Rhodia, "Hi-Sil EZ150G" from PPG, "Zeopol 8715", "Zeopol 8745" and "Zeopol 8755" from Huber or the silicas with a high specific surface area as described in a patent application WO 03/016387. Mention will be made, as pyrogenic silicas, for example, of "CAB-O-SIL S-17D" from Cabot, "HDK T40" from Wacker, "Aeroperl 300/30", "Aerosil 380", "Aerosil 150" or "Aerosil 90" from Evonik. Such silica may be covered, for example, "CAB-O-SIL TS-530" covered with hexamethyldiasilazene or "CAB-O-SIL TS-622" covered with dimethyldichlorosilane from Cabot.

The reinforcing inorganic filler used, particularly in case of that it is silica, has a BET surface area and a CTAB specific surface area that are advantageously 50 to 350 m²/g, more advantageously 100 to 300 m²/g, still more preferably between 150 and 250 m²/g.

The BET surface area is measured according to a known method, that is, by gas adsorption using the Brunauer-Emmett-Teller method described in "The Journal of the American Chemical Society", Vol. 60, page 309, February 1938, and more specifically, in accordance with the French standard NF ISO 9277 of December 1996 (multipoint volumetric method (5 points); where gas: nitrogen, degassing: 1 hour at 160°C, relative pressure range p/po: 0.05 to 0.17). The CTAB specific surface area is determined according to the French standard NF T 45-007 of November 1987 (method B).

A person skilled in the art will understand that a reinforcing filler of another nature, in particular organic nature, such as carbon black, might be used as filler equivalent to the reinforcing inorganic filler described in the present section, provided that this reinforcing filler is covered with an inorganic layer, such as silica, or else comprises, at its surface, functional sites, in particular hydroxyls, requiring the use of a coupling agent in order to form the connection between the filler and the elastomer. By way of example, mention may be made of carbon blacks for tires, such as described in patent applications WO 96/37547 and WO 99/28380.

A tenth aspect of the invention is the tire according to any one of the first to the ninth aspects, wherein the reinforcing filler comprises less than 40 phr (for example, between 0 and 40 phr), preferably less than 30 phr (for example, between 0.5 and 30 phr), more preferably less than 20 phr (for example, between 1.0 and 20 phr), still more preferably less than 10 phr (for example, between 1.5 and 10 phr), particularly less than 5.0 phr (for example, between 2.0 and 5.0 phr), of carbon black.

Within the ranges indicated, there is a benefit of coloring properties (black pigmentation agent) and anti-UV properties of carbon blacks, without furthermore adversely affecting the typical performance provided by the reinforcing inorganic filler, namely high grip on wet, snowy and icy grounds.

In order to couple the reinforcing inorganic filler to the elastomer matrix, for instance, the diene elastomer, use can be made, in a known manner, of a coupling agent (or bonding agent) intended to provide a satisfactory connection, of chemical and/or physical nature, between the reinforcing inorganic filler (surface of its particles) and the elastomer matrix, for instance, the diene elastomer. This coupling agent is at least bifunctional. Use can be made in particular of at least bifunctional organosilanes or polyorganosiloxanes.

Use can be made in particular of silane polysulphides, referred to as "symmetrical" or "asymmetrical" depending on their particular structure, as described, for example, in applications WO 03/002648, WO 03/002649 and WO 2004/033548.

Particularly suitable silane polysulphides correspond to the following general formula (I):

(I) Z - A - Sx - A - Z,

in which:
- x is an integer from 2 to 8 (preferably from 2 to 5);
- A is a divalent hydrocarbon radical (preferably, C₁-C₁₈ alkylene groups or C₆-C₁₂ arylene groups, more particularly C₁-C₁₀, in particular C₁-C₄, alkylenes, especially propylene);
- Z corresponds to one of the formulae below: 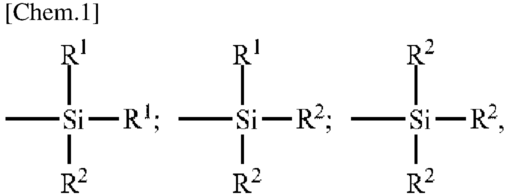
in which:
- the R¹ radicals which are unsubstituted or substituted and identical to or different from one another, represent a C₁-C₁₈ alkyl, C₅-C₁₈ cycloalkyl or C₆-C₁₈ aryl group (preferably, C₁-C₆ alkyl, cyclohexyl or phenyl groups, in particular C₁-C₄ alkyl groups, more particularly methyl and/or ethyl),
- the R² radicals which are unsubstituted or substituted and identical to or different from one another, represent a C₁-C₁₈ alkoxyl or C₅-C₁₈ cycloalkoxyl group (preferably a group selected from C₁-C₈ alkoxyls and C₅-C₈ cycloalkoxyls, more preferably a group selected from C₁-C₄ alkoxyls, in particular methoxyl and ethoxyl), are suitable in particular, without limitation of the above definition.

In the case of a mixture of alkoxysilane polysulphides corresponding to the above formula (I), in particular normal commercially available mixtures, the mean value of the "x" indices is a fractional number preferably of between 2 and 5, more preferably of approximately 4. However, the present invention can also advantageously be carried out, for example, with alkoxysilane disulphides (x = 2).

Mention will more particularly be made, as examples of silane polysulphides, of bis((C₁-C₄)alkoxyl(C₁-C₄)alkylsilyl(C₁-C₄)alkyl)polysulphides (in particular disulphides, trisulphides or tetrasulphides), such as, for example, bis(3-trimethoxysilylpropyl) or bis(3-triethoxysilylpropyl)polysulphides. Use is in particular made, among these compounds, of bis(3-triethoxysilylpropyl)tetrasulphide, abbreviated to TESPT, of formula [(C₂H₅O)₃Si(CH₂)₃S₂]₂, or bis(3-triethoxysilylpropyl)disulphide, abbreviated to TESPD, of formula [(C₂HSO)₃ Si(CH₂)₃S]₂. Mention will also be made, as preferred examples, of bis(mono(C₁-C₄ )alkoxyldi(C₁-C₄)alkylsilylpropyl)polysulphides (in particular disulphides, trisulphides or tetrasulphides), more particularly bis(monoethoxydimethylsilylpropyl)tetrasulphide, as described in patent application WO 02/083782 (or US 7 217 751).

Mention will in particular be made, as coupling agent other than alkoxysilane polysulphide, of bifunctional POSs (polyorganosiloxanes) or of hydroxysilane polysulphides (R² = OH in the above formula (I)), such as described in patent applications WO 02/30939 (or US 6 774 255) and WO 02/31041 (or US 2004/051210), or of silanes or POSs carrying azodicarbonyl functional groups, such as described, for example, in patent applications WO 2006/125532, WO 2006/125533 and WO 2006/125534.

As examples of other silane sulphides, mention will be made, for example, of the silanes bearing at least one thiol (-SH) function (referred to as mercaptosilanes) and/or at least one blocked thiol function, such as described, for example, in patents or patent applications US 6 849 754, WO 99/09036, WO 2006/023815, WO 2007/098080, WO 2008/055986 and WO 2010/072685.

Of course, use could also be made of mixtures of the coupling agents described previously, as described in particular in the aforementioned patent application WO 2006/125534.

According to a preferred embodiment of the invention, the content of coupling agent may be from 0.5 to 15% by weight per 100% by weight of the reinforcing inorganic filler, particularly silica.

According to a preferred embodiment of the invention, the rubber composition may be based on less than 30 phr (for example, between 0.1 and 30 phr), preferably less than 25 phr (for example, between 0.5 and 25 phr), more preferably less than 20 phr (for example, between 1 and 20 phr), still more preferably less than 15 phr (for example, between 1.5 and 15 phr) of coupling agent.

The rubber composition of the tread of the tire according to the invention is based on a plasticizing agent.

The plasticizing agent may comprise a liquid plasticizer(s), a hydrocarbon resin(s), or the mixtures thereof.

The plasticizing agent in the rubber composition of the tread of the tire according to the invention comprises more than 30 phr (for example, between 30 and 150 phr), preferably more than 40 phr (for example, between 40 and 140 phr), more preferably more than 50 phr (for example, between 50 and 130 phr), of at least one liquid plasticizer exhibiting a glass transition temperature (Tg_{DSC}) less than -70°C (for example, between -140°C and -70°C).

The role of liquid plasticizer is to soften the matrix by diluting the elastomer and the reinforcing filler.

Any extending oil, whether of aromatic or non-aromatic nature, any liquid plasticizing agent known for its plasticizing properties with regard to elastomer matrix(es), for instance, diene elastomers, can be used as the liquid plasticizer. At ambient temperature (20°C) under atmospheric pressure, these plasticizers or these oils, which are more or less viscous, are liquids (that is to say, as a reminder, substances that have the ability to eventually take on the shape of their container), as opposite to plasticizing hydrocarbon resin(s) which are by nature solid at ambient temperature (20°C) under atmospheric pressure.

Regarding the content of the liquid plasticizer, below the indicated minimum, the targeted technical effect is insufficient. Wherein the indicated maximum, there is an issue of cost of the liquid plasticizer and a risk of worsening processability.

An eleventh aspect of the invention is the tire according to any one of the first to the tenth aspects, wherein the plasticizing agent comprises more than 60 phr (for example, between 60 and 120 phr), preferably more than 70 phr (for example, between 70 and 110 phr), more preferably more than 80 phr (for example, between 80 and 100 phr), still more preferably (for example, from 85 to 95 phr), of the liquid plasticizer.

A twelfth aspect of the invention is the tire according to any one of the first to the eleventh aspects, wherein the liquid plasticizer exhibits a glass transition temperature (Tg_{DSC}) of less than -80°C (for example, between -130°C and -80°C), preferably less than -90°C (for example, between -120°C and -90°C), more preferably at most -100°C (for example, from -110°C to -100°C).

A thirteenth aspect of the invention is the tire according to any one of the first to the twelfth aspects, wherein the liquid plasticizer is selected from the group consisting of at least one phosphate plasticizer and the mixtures thereof.

A fourteenth aspect of the invention is the tire according to the thirteenth aspect, wherein the phosphate plasticizer has between 12 and 30 carbon atoms in total.

The number of carbon atoms of trialkyl phosphate should be taken to mean the total number of carbon atoms of three alkyl groups. The three alkyl groups of trialkyl phosphate may be the same or different each other. The term "alkyl" used herein refers to a straight or branched alkyl group, which may contain a hetero atom such as an oxygen atom in its chain, or which may be substituted with a halogen atom such as fluorine, chlorine, bromine or iodine. The trialkyl phosphate may have one or two phenyl groups of instead of alkyl groups.

Mention may be made, as examples of the trialkyl phosphate, of an oil selected from the group consisting of tris(2-butoxyethyl) phosphate (C₁₈H₃₉O₇P), 2-ethylhexyl diphenyl phosphate (C₂₀H₂₇O₄P), trioctyl phosphate (especially, tris(2-ethylhexyl) phosphate) (C₂₄H₅₁O₄P) and the mixtures thereof.

A fifteenth aspect of the invention is the tire according to the fourteenth aspect, wherein the phosphate plasticizer is tris(2-ethylhexyl) phosphate.

The liquid phosphate plasticizer is commercially available; for example, product name: Disflmoll TOF (Tg_{DSC}= -105°C) provided by Lanxess co., ltd.

A sixteenth aspect of the invention is the tire according to any one of the thirteenth to the fifteenth aspects, wherein the plasticizing agent optionally comprises 0 to 50 phr, preferably 0 to 40 phr, more preferably 0 to 30 phr, still more preferably 0 to 20 phr, particularly 0 to 10 phr, of at least one liquid plasticizer other than the phosphate plasticizer, which means the plasticizing agent comprises no liquid plasticizer other than the phosphate plasticizer or comprises at most 50 phr, preferably at most 40 phr, more preferably at most 30 phr, still more preferably at most 20 phr, particularly at most 10 phr of at least one liquid plasticizer other than the phosphate plasticizer.

A seventeenth aspect of the invention is the tire according to the sixteenth aspect, wherein the rubber composition is such that the liquid plasticizer other than the liquid phosphate plasticizer is selected from the group consisting of liquid diene polymers, polyolefinic oils, naphthenic oils, paraffinic oils, Distillate Aromatic Extracts (DAE) oils, Medium Extracted Solvates (MES) oils, Treated Distillate Aromatic Extracts (TDAE) oils, Residual Aromatic Extracts (RAE) oils, Treated Residual Aromatic Extracts (TRAE) oils, Safety Residual Aromatic Extracts (SRAE) oils, mineral oils, vegetable oils, ether plasticizers, ester plasticizers other than phosphate plasticizers, sulphonate plasticizers and the mixtures thereof, preferably selected from the group consisting of MES oils, TDAE oils, naphthenic oils, vegetable oils and the mixtures thereof, more preferably selected from the group consisting of MES oils, vegetable oils and the mixtures thereof, still more preferably selected from the group consisting of vegetable oils and the mixtures thereof. The vegetable oil(s) may be made of an oil selected from the group consisting of linseed, safflower, soybean, corn, cottonseed, turnip seed, castor, tung, pine, sunflower, palm, olive, coconut, groundnut and grapeseed oils, and the mixtures thereof, particularly sunflower oil(s), more particularly sunflower oil(s) containing over 60%, still more particularly over 70%, advantageously over 80%, more advantageously over 90%, still advantageously 100%, by weight of oleic acid.

An eighteenth aspect of the invention is the tire according to any one of the first to seventeenth aspects, wherein the plasticizing agent comprises more than 40 phr (for example, between 40 and 200 phr), preferably more than 50 phr (for example between 100 and 190 phr), more preferably more than 60 phr (for example between 60 and 180 phr), still more preferably more than 70 phr (for example between 70 and 170 phr), particularly more than 80 phr (for example between 80 and 160 phr), more particularly more than 90 phr (for example between 90 and 150 phr), still more particularly more than 100 phr (for example between 100 and 140 phr), advantageously more than 110 phr (for example, between 110 and 130 phr), more advantageously at least 115 phr (for example, from 115 to 125 phr), of at least one hydrocarbon resin exhibiting a glass transition temperature (Tg_{DSC}) above 20°C, preferably above 30°C, more preferably above 40°C.

The hydrocarbon resin(s) are polymer well known by a person skilled in the art, which are essentially based on carbon and hydrogen, and thus miscible by nature in rubber composition(s), for instance, diene elastomer composition(s). They can be aliphatic or aromatic or also of the aliphatic/aromatic type, that is to say based on aliphatic and/or aromatic monomers. They can be natural or synthetic and may or may not be petroleum-based (if such is the case, also known under the name of petroleum resins). They are preferably exclusively hydrocarbon, that is to say, that they comprise only carbon and hydrogen atoms.

Preferably, the hydrocarbon resins as being "plasticizing" exhibit at least one, more preferably all, of the following characteristics:
- a Tg_{DSC} of above 20°C (for example between 20°C and 100°C), preferably above 30°C (for example between 30°C and 100°C), more preferably above 40°C (for example between 40°C and 100°C);
- a number-average molecular weight (Mn) of between 400 and 2000 g/mol (more preferably between 500 and 1500 g/mol);
- a polydispersity index (PI) of less than 3, more preferably less than 2 (reminder: PI = Mw/Mn with Mw the weight-average molecular weight).

The macrostructure (Mw, Mn and PI) of the hydrocarbon resins is determined by steric exclusion chromatography (SEC): solvent tetrahydrofuran; temperature 35°C; concentration 1 g/l; flow rate 1 ml/min; solution filtered through a filter with a porosity of 0.45µm before injection; Moore calibration with polystyrene standards; set of 3 "Waters" columns in series ("Styragel" HR4E, HR1 and HR0.5); detection by differential refractometer ("Waters 2410") and its associated operating software ("Waters Empower").

A nineteenth aspect of the invention is the tire according to the eighteenth aspect, wherein the hydrocarbon resin is selected from the group consisting of cyclopentadiene (abbreviated to CPD) homopolymer or copolymer resins, dicyclopentadiene (abbreviated to DCPD) homopolymer or copolymer resins, terpene homopolymer or copolymer resins, C₅ fraction homopolymer or copolymer resins, C₉ fraction homopolymer or copolymer resins, alpha-methyl styrene homopolymer or copolymer resins and the mixtures thereof. Use is more preferably made, among the above copolymer resins, of those selected from the group consisting of (D)CPD/vinylaromatic copolymer resins, (D)CPD/terpene copolymer resins, (D)CPD/C₅ fraction copolymer resins, (D)CPD/C₉ fraction copolymer resins, terpene/ vinylaromatic copolymer resins, terpene/phenol copolymer resins, C₅ fraction/ vinyl-aromatic copolymer resins, C₉ fraction/vinylaromatic copolymer resins, and the mixtures thereof.

The term "terpene" combines here, in a known way, the α-pinene, β-pinene and limonene monomers; use is preferably made of a limonene monomer, which compound exists, in a known way, in the form of three possible isomers: L-limonene (laevorotatory enantiomer), D-limonene (dextrorotatory enantiomer) or else dipentene, the racemate of the dextrorotatory and laevorotatory enantiomers. Styrene, α-methylstyrene, ortho-, meta- or para-methylstyrene, vinyltoluene, para-(tert-butyl)styrene, methoxystyrenes, chlorostyrenes, hydroxystyrenes vinylmesitylene, divinylbenzene, vinylnaphthalene, or any vinylaromatic monomer resulting from a C₉ fraction (or more generally from a C₈ to C₁₀ fraction) are suitable, for example, as vinylaromatic monomer. Preferably, the vinylaromatic compound is styrene or a vinylaromatic monomer resulting from a C₉ fraction (or more generally from a C₈ to C₁₀ fraction). Preferably, the vinylaromatic compound is the minor monomer, expressed as molar fraction, in the copolymer under consideration.

The preferred resins above are well known to a person skilled in the art and are commercially available, for example:
- polylimonene resins: by DRT under the name "Dercolyte L120" (Mn=625 g/mol; Mw=1010 g/mol; PI=1.6; Tg_{DSC}=72°C) or by Arizona Chemical Company under the name "Sylvagum TR7125C" (Mn=630 g/mol; Mw=950 g/mol; PI=1.5; Tg_{DSC}=70°C);
- C₅ fraction/vinylaromatic, notably C₅ fraction/styrene or C₅ fraction/C₉ fraction, copolymer resins: by Neville Chemical Company under the names "Super Nevtac 78", "Super Nevtac 85" or "Super Nevtac 99", by Goodyear Chemicals under the name "Wingtack Extra", by Kolon under the names "Hikorez T1095" and "Hikorez T1100", or by Exxon under the names "Escorez 2101" and "ECR 373"; limonene/styrene copolymer resins: by DRT under the name "Dercolyte TS 105" or by Arizona Chemical Company under the names "ZT115LT" and "ZT5100".

Mention may also be made, as examples of other preferred resins, of phenol-modified α-methylstirene resins. It should be remembered that, in order to characterize these phenol-modified resins, use is made, in a known way, of a number referred to as "hydroxyl number" (measured according to Standard ISO 4326 and expressed in mg KOH/g). α-Methylstirene resins, in particular those modified with phenol, are well known to a person skilled in the art and are available commercially, for example sold by Arizona Chemical Company under the names "Sylvares SA 100" (Mn=660 g/mol; PI=1.5; Tg_{DSC}=53°C); "Sylvares SA 120" (Mn=1030 g/mol; PI=1.9; Tg_{DSC}=64°C); "Sylvares 540" (Mn=620 g/mol; PI=1.3; Tg_{DSC}=36°C; hydroxyl number=56 mg KOH/ g); and "Sylvares 600" (Mn=850 g/mol; PI=1.4; Tg_{DSC}=50°C; hydroxyl number=31 mg KOH/g).

A twentieth aspect of the invention is the tire according to any one of the first to the nineteenth aspects, wherein the total content of plasticizing agent is more than 70 phr (for example, between 70 and 350 phr), preferably more than 80 phr (for example, between 80 and 340 phr), more preferably more than 90 phr (for example, between 90 and 330 phr), still more preferably more than 100 phr (for example, between 100 and 320 phr), even still more preferably more than 110 phr (for example, between 110 and 310 phr), particularly more than 120 phr (for example, between 120 and 300 phr), more particularly more than 130 phr (for example, between 130 and 290 phr), still more particularly more than 140 phr (for example, between 140 and 280 phr), even still more particularly more than 150 phr (for example, between 150 and 270 phr), especially more than 160 phr (for example, between 160 and 260 phr), more especially more than 170 phr (for example, between 170 and 250 phr), still more especially more than 180 phr (for example, between 180 and 240 phr), even still more especially more than 190 phr (for example, between 190 and 230 phr), advantageously more than 200 phr (for example, between 200 and 220 phr), more advantageously at least 205 phr (for example, from 205 to 215 phr).

A twenty first aspect of the invention is the tire according to any one of the first to the twentieth aspects, wherein a ratio of the total content of plasticizing agent to the total content of reinforcing filler is between 0.6 and 1.7, preferably between 0.6 to 1.6, more preferably between 0.6 and 1.5, still more preferably between 0.6 and 1.4, particularly between 0.6 and 1.3, more particularly between 0.6 and 1.2, still more particularly between 0.6 and 1.1, especially between 0.6 and 1.0, more especially from 0.7 to 0.9.

The rubber compositions of the treads of the tires according to the invention may be based on all or a portion(s) of the usual additives generally used in the elastomer compositions intended for the manufacture of treads for tires, in particular for snow tires or winter tires, such as, for example, protection agents, such as antiozone waxes, chemical antiozonants, antioxidants, reinforcing resins, methylene acceptors (for example phenolic novolak resin) or methylene donors (for example HMT or H3M), a crosslinking system based either on sulphur or on donors of sulphur and/or per oxide and/or bismaleimides, vulcanization accelerators, or vulcanization activators.

These compositions can be also based on coupling activators when a coupling agent is used, agents for covering the reinforcing inorganic filler or more generally processing aids capable, in a known way, by virtue of an improvement in the dispersion of the filler in the rubber matrix and of a lowering of the viscosity of the compositions, of improving their property of processing in the raw state; these agents are, for example, hydrolysable silanes, such as alkylalkoxysilanes, polyols, polyethers, amines, or hydroxylated or hydrolysable polyorganosiloxanes.

The rubber compositions of the treads of the tires according to the invention may be manufactured in appropriate mixers using two successive preparation phases well known to a person skilled in the art: a first phase of thermomechanical working or kneading (referred to a as "non-productive" phase) at high temperature, up to a maximum temperature of between 110°C and 190°C, preferably between 130°C and 180°C, followed by a second phase of mechanical working (referred to as "productive" phase) at a lower temperature, typically of less than 110°C, for example between 40°C and 100°C, finishing phase during which the crosslinking or vulcanization system is incorporated.

A process which can be used for the manufacture of such compositions comprises, for example and preferably, the following steps:
- incorporating in the elastomer matrix, for instance, the diene elastomer(s), in a mixer, the reinforcing filler, the plasticizing agent, during a first stage ("non productive" stage) everything being kneaded thermomechanically (for example in one or more steps) until a maximum temperature of between 110°C and 190°C is reached;
- cooling the combined mixture to a temperature of less than 100°C;
- subsequently incorporating, during a second stage (referred to as a "productive" stage), a crosslinking system;
- kneading everything up to a maximum temperature of less than 110°C;
- extruding or calendering the rubber composition thus obtained, in particular in the form of a tire tread.

By way of example, the first (non-productive) phase is carried out in a single thermomechanical stage during which all the necessary constituents are introduced into an appropriate mixer, such as a standard internal mixer, followed, in a second step, for example after kneading for 1 to 2 minutes, by the other additives, optional additional filler-covering agents or processing aids, with the exception of the crosslinking system. The total kneading time, in this non-productive phase, is preferably between 1 and 15 min.

After cooling the mixture thus obtained, the crosslinking system is then incorporated at low temperature (for example, between 40°C and 100°C), generally in an external mixer, such as an open mill; the combined mixture is then mixed (the second (productive) phase) for a few minutes, for example between 2 and 15 min.

The crosslinking system is preferably based on sulphur and on a primary vulcanization accelerator, in particular on an accelerator of sulphenamide type. Added to this vulcanization system are various known secondary accelerators or vulcanization activators, such as zinc oxide, stearic acid, guanidine derivatives (in particular diphenylguanidine), and the like, incorporated during the first non-productive phase and/or during the productive phase. The content of sulphur is preferably between 0.5 and 10.0 phr, more preferably between 0.5 and 3.0 phr, and that of the primary accelerator is preferably between 0.5 and 5.0 phr.

Use may be made, as accelerator (primary or secondary) of any compound capable of acting as accelerator of the vulcanization of elastomer matrix, for instance, diene elastomers, in the presence of sulphur, in particular accelerators of the thiazoles type and their derivatives, accelerators of thiurams types, or zinc dithiocar bamates. These accelerators are more preferably selected from the group consisting of 2-mercaptobenzothiazyl disulphide (abbreviated to "MBTS"), N-cyclohexyl-2-benzothiazole sulphenamide (abbreviated to "CBS"), N,N-dicyclohexyl-2 benzothiazolesulphenamide ("DCBS"), N-ter't-butyl-2-ben zothiazolesulphenamide ("TBBS"), N-tert-butyl-2 benzothiazolesulphenimide ("TBSI"), zinc dibenzyldithio-carbamate ("ZBEC"), Tetrabenzylthiuram disulfide ("TBZTD") and the mixtures thereof.

The final composition thus obtained is subsequently calendered, for example in the form of a sheet or of a plaque, in particular for laboratory characterization, or else extruded in the form of a rubber profiled element which can be used directly as snow tire tread or winter tire tread.

The vulcanization (or curing) is carried out in a known way at a temperature generally of between 110°C and 190°C for a sufficient time which can vary, for example, between 5 and 90 min depending in particular on the curing temperature, the vulcanization system adopted and the vulcanization kinetics of the composition under consideration.

The rubber compositions of the treads of the snow tires according to the invention can constitute all or a portion only of the tread in accordance with the invention, in the case of a tread of composite type formed from several rubber compositions of different formulations.

The invention relates to the rubber compositions and to the treads described above, both in the raw state (i.e., before curing) and in the cured state (i.e., after crosslinking or vulcanization).

The invention also applies to the cases where the rubber compositions described above form only one part of treads of composite or hybrid type, especially those consisting of two radially superposed layers of different formulations (referred to as "cap-base" construction), that are both patterned and intended to come into contact with the road when the tire is rolling, during the service life of the latter. The base part of the formulation described above could then constitute the radially outer layer of the tread intended to come into contact with the ground from the moment when a new tire starts rolling, or on the other hand its radially inner layer intended to come into contact with the ground at a later stage.

A twenty second aspect of the invention is the tire according to any one of the first to the twenty first aspects, wherein the tire is a snow tire.

The invention is further illustrated by the following non-limiting examples.

### Example

In the test, six rubber compositions identified as T-1 to T-3 (a reference and comparative examples) and C-1 to C-3 (examples according to the invention) are compared. They are based on a diene elastomer(s) (a SBR or a mixture of SBR and BR) reinforced with a blend of at most or more than 150 phr of silica and carbon black, and a plasticizing agent a liquid plasticizer exhibiting a glass transition temperature of at least or less than -70°C. The formulations of the six rubber compositions, with the content of the various products expressed in phr, and their properties after curing are given at Table 1.

The reinforcing filler, its associated coupling agent, the plasticizing agent, the elastomer matrix and the various other ingredient, with the exception of the vulcanization system, were successively introduced into an internal mixer having an initial vessel temperature of approximately 60°C; the mixer was thus approximately 70% full (% by volume). Thermomechanical working (non-productive phase) was then carried out in one stage, which lasts in total approximately 3 to 4 minutes, until a maximum "dropping" temperature of 165°C was reached. The mixture thus obtained was recovered and cooled and then sulphur and an accelerator of sulphenamide type were incorporated on an external mixer (homofinisher) at 20 to 30°C, everything being mixed (productive phase) for an appropriate time (for example, between 5 and 12 min).

The compositions thus obtained were subsequently calendered, either in the form of sheets (thickness of 2 to 3 mm) or of fine sheets of rubber, for the measurement of their physical or mechanical properties, or in the form of profiled elements which could be used directly, after cutting and/or assembling to the desired dimensions, for example as tire semi-finished products, in particular as tire treads.

The rubber composition (T-2) could not be extracted from the internal mixer as it was too sticky, so it could not be prepared.

Each of the above compositions was tested in order to measure the dynamic properties on a viscosity (Metravib VA4000) according to Standard ASTM D5992-96. The response of a sample of vulcanized composition (cylindrical test specimen with a thickness of 4 mm and with a cross section of 400 m²), subjected to a simple alternating sinusoidal shear stress, at a frequency of 10 Hz, during a temperature sweep, under a stationary stress of 0.25MPa, was recorded; integral of the tan(δ) value observed from -30°C to 0°C was recorded. It should be remembered that, in a way well known to a person skilled in the art, the integral average ratio of the tan(δ) value of the examples (or the comparative examples) to that of the reference (T-1), set at 100, is representative of the grip performance on wet roads, therefore a value greater than that of the reference composition (T-1), set at 100, indicates an improved performance.

For friction coefficient measurements on snow, that is Snow µ laboratory measurement, after molding into the form of block(s) and before the friction coefficient measurements, each of the rubber compositions was placed in a press with heated platens at a temperature (typically 150°C), and for the time that was necessary for the crosslinking of these rubber compositions (typically several tens of minutes), at a pressure (typically 16 bar).

The friction coefficient measurements were carried out based on the block(s) of the rubber compositions sliding at a given condition (a displacement: 0 to 0.03 m, a speed: 0 to 0.5 m/s, and an acceleration: 5 m/s²) over a hard pack snow track, set at around-10°Cwith a CTI penetrometer reading of about 90 in accordance with to Standard ASTM F1805, with an imposed stress (200 to 300 kPa). The forces generated in a direction of travel (Fx) of the block(s) and in another direction perpendicular to the travel (Fz) were measured. The Fx/Fz ratio determines the friction coefficient of the test specimen on the snow. This test, the principle of which is well known to a person skilled in the art (see, for example, an article entitled "Investigation of rubber friction on snow for tires" written by Sam Ella, Pierre-Yves Formagne, Vasileios Koutsos and Jane R. Blackford (38th LEEDS-Lyons Symposium on tribology, Lyons, 6-9 Sep. 2011)) makes it possible to evaluate, under representative conditions, the grip on snow which would be obtained after a running test on a vehicle fitted with tires whose tread is composed of the same rubber compositions. Values are expressed as snow grip performance, therefore a value greater than that of the reference composition (T-1), set at 100, indicates an improved performance.

The results from Table 1 demonstrate that the rubber compositions (C-1 to C-3) according to the invention have an unexpectedly improved balance of performances between snow and wet grips than that of the reference or the comparative example (T-1 and T-3).

In conclusion, the rubber composition of the tread of the tire according to the invention allows an improvement of the balance of performances between wet and snow grips of the tire.

**[Table 1]**

| Rubber composition(s) | T-1 | T-2 | T-3 | C-1 | C-2 | C-3 |
|---|---|---|---|---|---|---|
| BR (1) | 40 | 40 | 40 | 40 | | |
| SBR1 (2) | 60 | 60 | 60 | 60 | 100 | |
| SBR2 (3) | | | | | | 100 |
| Carbon black (4) | 4 | 4 | 4 | 4 | 4 | 4 |
| Silica (5) | 115 | 115 | 250 | 250 | 250 | 250 |
| Coupling agent (6) | 9.2 | 9.2 | 20 | 20 | 20 | 20 |
| Hydrocarbon resin (7) | 40 | 120 | 120 | 120 | 120 | 120 |
| Liquid plasticizer 1 (8) | 30 | 90 | 90 | | | |
| Liquid plasticizer 2 (9) | | | | 90 | 90 | 90 |
| ZnO | 1.4 | 1.4 | 1.4 | 1.4 | 1.4 | 1.4 |
| Stearic acid | 3 | 3 | 3 | 3 | 3 | 3 |
| Antiozone wax | 1.9 | 1.9 | 1.9 | 1.9 | 1.9 | 1.9 |
| Antioxidant (10) | 4.8 | 4.8 | 4.8 | 4.8 | 4.8 | 4.8 |
| DPG (11) | 4.6 | 4.6 | 4.6 | 4.6 | 4.6 | 4.6 |
| Sulphur | 1.4 | 1.4 | 1.4 | 1.4 | 1.4 | 1.4 |
| Accelerator (12) | 3 | 3 | 3 | 3 | 3 | 3 |

| Properties after vulcanization | | | | | | |
|---|---|---|---|---|---|---|
| Snow *µ* laboratory | 100 | nm^{∗} | 56 | 117 | 102 | 56 |
| Integral average Tan( δ )[0.25 MPa, 10Hz, -30°C to 0°C] | 100 | nm^{∗} | 96 | 197 | 194 | 178 |
| Balance of performance between snow and wet grip | 100 | nm^{∗} | 76 | 157 | 148 | 117 |

| | | | | | | |
|---|---|---|---|---|---|---|
| nm^{∗}: not measured because the rubber composition could not be prepared as it was too sticky. (1) BR: BR with 0.3% of 1,2 vinyl; 2.7% of trans; 97% of cis-1,4 (Tg_{DSC} = -105°C); (2) SBR1: solution SBR with 16% of styrene unit (Tg_{DSC} = -65°C); (3) SBR2: solution SBR with 44% of styrene unit (Tg_{DSC} = -12°C); (4) Carbon black: Carbon black (ASTM grade N234 from Cabot); (5) Silica: Silica ("Zeosil 1165MP" from Rhodia (CTAB, BET: about 160 m²/g)); (6) Coupling agent TESPT ("Si69" from Evonik); (7) Hydrocarbon resin C₅/C₉ type ("Escorez ECR-373" from Exxon, Tg_{DSC}= 44°C); (8) MES oil ("Catenex SNR" from Shell, Tg_{DSC}=-60±3°C); (9) Tris(2-ethylhexyl)phosphate ("Disflamoll TOF" from Lanxess, Tg_{DSC}= -105°C); (10) N-(1,3-dimethylbutyl)-N-phenyl-para-phenylenediamine ("Santoflex 6-PPD" from Flexsys); (11) Diphenylguanidine ("Perkacit DPG" from Flexsys); (12) N-dicyclohexyl-2-benzothiazolesulphenamide ("Santocure CBS" from Flexsys); | | | | | | |

## Claims

1. A tire having a tread that comprises a rubber composition based on at least:
- an elastomer matrix;
- a reinforcing filler comprising more than 200 phr of a reinforcing inorganic filler; and
- a plasticizing agent comprising more than 30 phr of at least one liquid plasticizer exhibiting a glass transition temperature less than -70°C, preferably less than -80°C.

2. The tire according to Claim 1, wherein the elastomer matrix comprises more than 50 phr of a first diene elastomer which is a styrene-butadiene copolymer, and optionally comprises 0 to less than 50 phr of a second diene elastomer which is different from the first diene elastomer, preferably wherein the styrene-butadiene copolymer exhibits a styrene unit of less than 30% by weight per 100% by weight of the styrene-butadiene copolymer.

3. The tire composition according to Claim 2, wherein the first diene elastomer exhibits a glass transition temperature of less than -40°C.

4. The tire according to Claim 2 or Claim 3, wherein the elastomer matrix comprises 55 to 100 phr of the first diene elastomer, and optionally, 0 to 45 phr of the second diene elastomer.

5. The tire according to any one of Claims 2 to 4, wherein the second diene elastomer is selected from the group consisting of polybutadienes, synthetic polyisoprenes, natural rubber, butadiene copolymers other than the first diene elastomer, isoprene copolymers and the mixtures thereof.

6. The tire according to any one of Claims 2 to 5, wherein the second diene elastomer is a polybutadiene.

7. The tire according to any one of Claims 1 to 6, wherein the reinforcing inorganic filler predominately comprises silica.

8. The tire according to any one of Claims 1 to 7, wherein the reinforcing filler comprises less than 40 phr of carbon black.

9. The tire according to any one of Claims 1 to 8, wherein the plasticizing agent comprises more than 60 phr of the liquid plasticizer.

10. The tire according to any one of Claims 1 to 9, wherein the liquid plasticizer is selected from the group consisting of at least one phosphate plasticizer and the mixtures thereof, preferably wherein the phosphate plasticizer has between 12 and 30 carbon atoms in total, more preferably wherein the phosphate plasticizer is tris(2-ethylhexyl) phosphate, still more preferably wherein the plasticizing agent optionally comprises 0 to 50 phr of at least one liquid plasticizer other than the phosphate plasticizer, particularly wherein the liquid plasticizer other than the phosphate plasticizer is selected from the group consisting of liquid diene polymers, polyolefinic oils, naphthenic oils, paraffinic oils, Distillate Aromatic Extracts (DAE) oils, Medium Extracted Solvates (MES) oils, Treated Distillate Aromatic Extracts (TDAE) oils, Residual Aromatic Extracts (RAE) oils, Treated Residual Aromatic Extracts (TRAE) oils, Safety Residual Aromatic Extracts (SRAE) oils, mineral oils, vegetable oils, ether plasticizers, ester plasticizers other than phosphate plasticizers, sulphonate plasticizers and the mixtures thereof.

11. The tire according to any one of Claims 1 to 10, wherein the plasticizing agent further comprises more than 40 phr of at least one hydrocarbon resin exhibiting a glass transition temperature of more than 20°C, preferably wherein the hydrocarbon resin is selected from the group consisting of cyclopentadiene homopolymer or copolymer resins, dicyclopentadiene homopolymer or copolymer resins, terpene homopolymer or copolymer resins, C₅ fraction homopolymer or copolymer resins, C₉ fraction homopolymer or copolymer resins, alpha-methyl styrene homopolymer or copolymer resins, and the mixtures thereof.

12. The tire according to any one of Claims 1 to 11, wherein the total content of plasticizing agent is more than 70 phr.

13. The tire according to any one of Claims 1 to 12, wherein a ratio of the total content of plasticizing agent to the total content of reinforcing filler is between 0.6 and 1.7.

14. The tire according to any one of Claims 1 to 13, wherein the tire is a snow tire.

## Patentansprüche

1. Reifen mit einer Lauffläche, die eine Kautschukzusammensetzung umfasst auf Grundlage von wenigstens:
- einer Elastomermatrix;
- einem Verstärkungsfüllstoff, der mehr als 200 phr an einem anorganischen Verstärkungsfüllstoff umfasst; und
- einem Weichmacher, der mehr als 30 phr an wenigstens einem flüssigen Weichmacher umfasst, der eine Glasübergangstemperatur von unter -70 °C, vorzugsweise unter -80 °C, aufweist.

2. Reifen gemäß Anspruch 1, wobei die Elastomermatrix mehr als 50 phr an einem ersten Dien-Elastomer umfasst, das ein Styrol-Butadien-Copolymer ist, und gegebenenfalls 0 bis weniger als 50 phr an einem zweiten Dien-Elastomer umfasst, das von dem ersten Dien-Elastomer verschieden ist, wobei das Styrol-Butadien-Copolymer vorzugsweise eine Styroleinheit von weniger als 30 Gew.-% pro 100 Gew.-% des Styrol-Butadien-Copolymers aufweist.

3. Reifenzusammensetzung gemäß Anspruch 2, wobei das erste Dien-Elastomer eine Glasübergangstemperatur von unter -40 °C aufweist.

4. Reifen gemäß Anspruch 2 oder Anspruch 3, wobei die Elastomermatrix 55 bis 100 phr an dem ersten Dien-Elastomer und gegebenenfalls 0 bis 45 phr an dem zweiten Dien-Elastomer umfasst.

5. Reifen gemäß einem der Ansprüche 2 bis 4, wobei das zweite Dien-Elastomer ausgewählt ist aus der Gruppe bestehend aus Polybutadienen, synthetischen Polyisoprenen, Naturkautschuk, Butadien-Copolymeren, die von dem ersten Dien-Elastomer verschieden sind, Isopren-Copolymeren und Gemischen davon.

6. Reifen gemäß einem der Ansprüche 2 bis 5, wobei das zweite Dien-Elastomer ein Polybutadien ist.

7. Reifen gemäß einem der Ansprüche 1 bis 6, wobei der anorganische Verstärkungsfüllstoff hauptsächlich Siliciumdioxid umfasst.

8. Reifen gemäß einem der Ansprüche 1 bis 7, wobei der Verstärkungsfüllstoff weniger als 40 phr Ruß umfasst.

9. Reifen gemäß einem der Ansprüche 1 bis 8, wobei der Weichmacher mehr als 60 phr an dem flüssigen Weichmacher umfasst.

10. Reifen gemäß einem der Ansprüche 1 bis 9, wobei der flüssige Weichmacher ausgewählt ist aus der Gruppe bestehend aus wenigstens einem Phosphat-Weichmacher und den Gemischen davon, wobei der Phosphat-Weichmacher vorzugsweise insgesamt zwischen 12 und 30 Kohlenstoffatome aufweist, wobei der Phosphat-Weichmacher bevorzugter Tris(2-ethylhexyl)phosphat ist, wobei der Weichmacher noch bevorzugter gegebenenfalls 0 bis 50 phr an wenigstens einem flüssigen Weichmacher, der von dem Phosphat-Weichmacher verschieden ist, umfasst, insbesondere wobei der flüssige Weichmacher, der von dem Phosphat-Weichmacher verschieden ist, ausgewählt ist aus der Gruppe bestehend aus flüssigen Dien-Polymeren, Polyolefinölen, Naphthenölen, Paraffinölen, DAE-Ölen (Distillate Aromatic Extracts), MES-Ölen (Medium Extracted Solvates), TDAE-Ölen (Treated Distillate Aromatic Extracts), RAE-Ölen (Residual Aromatic Extracts), TRAE-Ölen (Treated Residual Aromatic Extracts), SRAE-Ölen (Safety Residual Aromatic Extracts), Mineralölen, Pflanzenölen, Ether-Weichmachern, Ester-Weichmachern, die von Phosphat-Weichmachern verschieden sind, Sulfonat-Weichmachern und den Gemischen davon.

11. Reifen gemäß einem der Ansprüche 1 bis 10, wobei der Weichmacher ferner mehr als 40 phr an wenigstens einem Kohlenwasserstoffharz umfasst, das eine Glasübergangstemperatur von über 20 °C aufweist, wobei das Kohlenwasserstoffharz vorzugsweise ausgewählt ist aus der Gruppe bestehend aus Cyclopentadien-Homopolymer- oder -Copolymerharzen, Diyclopentadien-Homopolymer- oder -Copolymerharzen, Terpen-Homopolymer- oder -Copolymerharzen, Cs-Fraktion-Homopolymer- oder -Copolymerharzen, C₉-Fraktion-Homopolymer- oder -Copolymerharzen, alpha-Methylstyrol-Homopolymer- oder -Copolymerharzen und den Gemischen davon.

12. Reifen gemäß einem der Ansprüche 1 bis 11, wobei der Gesamtgehalt an Weichmacher größer als 70 phr ist.

13. Reifen gemäß einem der Ansprüche 1 bis 12, wobei ein Verhältnis des Gesamtgehalts an Weichmacher zu dem Gesamtgehalt an Verstärkungsfüllstoff zwischen 0,6 und 1,7 beträgt.

14. Reifen gemäß einem der Ansprüche 1 bis 13, wobei der Reifen ein Winterreifen ist.

## Revendications

1. Pneumatique ayant une bande de roulement qui comprend une composition de caoutchouc à base d'au moins :
- une matrice élastomère ;
- une charge renforçante comprenant plus de 200 pce d'une charge inorganique renforçante ; et
- un agent plastifiant comprenant plus de 30 pce d'au moins un plastifiant liquide présentant une température de transition vitreuse inférieure à -70°C, de préférence inférieure à -80°C.

2. Pneumatique selon la revendication 1, dans lequel la matrice élastomère comprend plus de 50 phr d'un premier élastomère diénique qui est un copolymère styrène-butadiène, et optionnellement comprend 0 à moins de 50 phr d'un second élastomère diénique qui est différent du premier élastomère diénique, de préférence dans lequel le copolymère styrène-butadiène présente un motif styrène inférieur à 30 % en poids pour 100 % en poids du copolymère styrène-butadiène.

3. Composition de pneumatique selon la revendication 2, dans laquelle le premier élastomère diénique présente une température de transition vitreuse inférieure à -40°C.

4. Pneumatique selon la revendication 2 ou la revendication 3, dans lequel la matrice élastomère comprend 55 à 100 phr du premier élastomère diénique, et optionnellement, 0 à 45 phr du second élastomère diénique.

5. Pneumatique selon l'une quelconque des revendications 2 à 4, dans lequel le deuxième élastomère diénique est choisi dans le groupe constitué par les polybutadiènes, les polyisoprènes de synthèse, le caoutchouc naturel, les copolymères de butadiène autres que le premier élastomère diénique, les copolymères d'isoprène et leurs mélanges.

6. Pneu selon l'une quelconque des revendications 2 à 5, dans lequel le second élastomère diénique est un polybutadiène.

7. Pneumatique selon l'une quelconque des revendications 1 à 6, dans lequel la charge inorganique renforçante comprend majoritairement de la silice.

8. Pneumatique selon l'une quelconque des revendications 1 à 7, dans lequel la charge renforçante comprend moins de 40 phr de noir de carbone.

9. Pneumatique selon l'une quelconque des revendications 1 à 8, dans lequel l'agent plastifiant comprend plus de 60 phr du plastifiant liquide.

10. Pneumatique selon l'une quelconque des revendications 1 à 9, dans lequel le plastifiant liquide est choisi dans le groupe constitué d'au moins un plastifiant phosphate et de leurs mélanges, de préférence dans lequel le plastifiant phosphate a entre 12 et 30 atomes de carbone au total, plus préférablement dans lequel le plastifiant phosphate est le phosphate de tris(2-éthylhexyle), encore plus préférablement dans lequel l'agent plastifiant comprend optionnellement 0 à 50 phr d'au moins un plastifiant liquide autre que le plastifiant phosphate, en particulier dans lequel le plastifiant liquide autre que le plastifiant phosphate est choisi du groupe constitué par les polymères diéniques liquides, les huiles polyoléfiniques, les huiles naphténiques, les huiles paraffiniques, les huiles d'extraits aromatiques distillés (DAE), les huiles de solvates extraits moyens (MES), les huiles d'extraits aromatiques distillés traités (TDAE), les huiles d'extraits aromatiques résiduels (RAE), les huiles d'extraits aromatiques résiduels traités (TRAE), les huiles d'extraits aromatiques résiduels de sécurité (SRAE), les huiles minérales, les huiles végétales, les plastifiants éthers, les plastifiants esters autres que les plastifiants phosphatés, les plastifiants sulfonates et leurs mélanges.

11. Pneumatique selon l'une quelconque des revendications 1 à 10, dans lequel l'agent plastifiant comprend en outre plus de 40 phr d'au moins une résine d'hydrocarbure présentant une température de transition vitreuse supérieure à 20°C, de préférence dans lequel la résine d'hydrocarbure est choisie dans le groupe constitué de résines homopolymères ou copolymères de cyclopentadiène, de résines homopolymères ou copolymères de dicyclopentadiène, de résines homopolymères ou copolymères terpéniques, de résines homopolymères ou copolymères de fraction C₅, de résines homopolymères ou copolymères de fraction C₉, de résines homopolymères ou copolymères d'alpha-méthyl styrène, et leurs mélanges.

12. Pneumatique selon l'une quelconque des revendications 1 à 11, dans lequel la teneur totale en agent plastifiant est supérieure à 70 pce.

13. Pneumatique selon l'une quelconque des revendications 1 à 12, dans lequel un rapport de la teneur totale en agent plastifiant à la teneur totale en charge renforçante est compris entre 0,6 et 1,7.

14. Pneumatique selon l'une quelconque des revendications 1 à 13, dans lequel le pneumatique est un pneu pneumatique.
